# EUROPÄISCHE PATENTANMELDUNG

(11) **EP 4 270 280 A1**
(43) Veröffentlichungstag der Anmeldung: **01.11.2023**
(21) Anmeldenummer: 23155751.3
(22) Anmeldetag: 09.02.2023
(51) Int. Cl.: G06Q 10/0631, G06Q 30/0645, G06Q 50/02, A01B 69/04

(54) **SCHWARMASSISTENZSYSTEM FÜR AUTONOME LANDWIRTSCHAFTLICHE UNIVERSAL-ARBEITSMASCHINEN**

(30) Priorität: 27.04.2022 DE 102022110211
(71) Anmelder: CLAAS E-Systems GmbH, 49201 Dissen (DE)
(72) Erfinder: Mähler, Reinhold, 33378 Rheda-Wiedenbrück (DE); Ehlert, Christian, 33719 Bielefeld (DE); Bormann, Bastian, 33334 Gütersloh (DE); Baumgarten, Joachim, 48361 Beelen (DE); Neitemeier, Dennis, 59510 Lippetal (DE); Witte, Johann, 58730 Fröndenberg (DE); Redenius, Jannik, 32361 Pr. Oldendorf (DE); Bohl, Arne, 33330 Gütersloh (DE); Nacke, Dr., Eberhard, 33332 Gütersloh (DE); Apke, Christoph, 33659 Bielefeld (DE); Korthals, Timo, 33818 Leopoldshöhe (DE); Thiesmann, Waldemar, 49080 Osnabrück (DE); Schröder, Axel, 33332 Gütersloh (DE); Monkenbusch, Robin, 33378 Rheda-Wiedenbrück (DE)
(74) Vertreter: CLAAS Gruppe

(57) **Zusammenfassung**

Die Erfindung betrifft ein Schwarmassistenzsystem für autonome landwirtschaftliche Universal-Arbeitsmaschinen (4), wobei das Schwarmassistenzsystem (8) in ein landwirtschaftliches Arbeitsnetzwerk (9) einbindbar ist, wobei das landwirtschaftliche Arbeitsnetzwerk (9) autonome landwirtschaftliche Universal-Arbeitsmaschinen (4) als Anbieter (10) von landwirtschaftlichen Arbeitsaufgaben und Abnehmer (11) von landwirtschaftlichen Arbeitsaufgaben miteinander und dem Schwarmassistenzsystem (8) verbindet, wobei die autonomen landwirtschaftlichen Universal-Arbeitsmaschinen (4) zur Durchführung einer Vielzahl unterschiedlicher landwirtschaftlicher Arbeitsaufgaben konfigurierbar sind, indem sie mit wechselnden Arbeitsaggregaten (5) ausgestattet werden, wobei das Schwarmassistenzsystem (8) eingerichtet ist, eine angefragte landwirtschaftliche Arbeitsaufgabe betreffende Anfragedaten von den Abnehmern (11) entgegenzunehmen, die Anfragedaten mit Kapazitätsdaten mindestens einer der landwirtschaftlichen Universal-Arbeitsmaschinen (4) abzugleichen und basierend auf dem Ergebnis des Abgleichs eine Vermietung mindestens einer landwirtschaftlichen Universal-Arbeitsmaschine (4) zur Durchführung der angefragten landwirtschaftlichen Arbeitsaufgabe durchzuführen.

## Beschreibung

Die vorliegende Erfindung betrifft ein Schwarmassistenzsystem für autonome landwirtschaftliche Universal-Arbeitsmaschinen gemäß dem Anspruch 1 sowie ein Verfahren zum Durchführen einer landwirtschaftlichen Arbeitsaufgabe gemäß dem Oberbegriff von Anspruch 11 sowie eine autonome landwirtschaftliche Arbeitsmaschine gemäß Anspruch 13 sowie ein Computerprogrammprodukt gemäß Anspruch 14.

Autonome Fahrzeuge sind auf dem Gebiet des Straßenverkehrs inzwischen allgemein bekannt. Grundsätzlich bekannt sind unterschiedliche Autonomiestufen, von kleineren technischen Unterstützungen eines menschlichen Fahrers bis hin zu den vorliegend unter "autonom" verstandenen Fahrzeugen, die rechtlich und technisch ohne direkte menschliche Überwachung komplexe Fahraufgaben bewältigen können und dürfen.

Neben den bekannten autonomen Kraftfahrzeugen werden auch Autonomiesierungsansätze in anderen Bereichen verfolgt. Hier werden konkret autonome landwirtschaftliche Arbeitsmaschinen betrachtet. Autonome landwirtschaftliche Arbeitsmaschinen ähneln zwar konzeptionell den autonomen Kraftfahrzeugen, insgesamt sind sie jedoch deutlich unterschiedlich zu betrachten. Autonome landwirtschaftliche Arbeitsmaschinen dienen nicht dem Transport von Personen, sondern allgemein der Durchführung landwirtschaftlicher Arbeitsaufgaben.

Grundsätzlich kann zwischen zwei Konzepten autonomer landwirtschaftlicher Arbeitsmaschinen unterschieden werden. Die autonomen landwirtschaftlichen Arbeitsmaschinen können einerseits spezialisiert sein, wie es beispielsweise ein autonomer Mähdrescher oder gar ein autonomer Weizen-Mähdrescher wäre, oder andererseits generalisiert. Derartige generalisierte autonome landwirtschaftliche Arbeitsmaschinen als autonome landwirtschaftliche Universal-Arbeitsmaschinen stehen hier im Fokus. Diese autonomen landwirtschaftlichen Universal-Arbeitsmaschinen zeichnen sich dadurch aus, dass sie durch wechselnde Konfigurationen wie wechselnde Arbeitsaggregate und wechselnde Softwarebausteine für eine Vielzahl unterschiedlicher landwirtschaftlicher Arbeitsaufgaben verwendet werden können.

Derartige autonome landwirtschaftliche Universal-Arbeitsmaschinen haben insbesondere entscheidende Vorteile hinsichtlich ihrer Auslastung und Anschaffungskosten, weisen jedoch den Nachteil auf, dass sie technisch, insbesondere softwareseitig, anspruchsvoller sind. Ein KI-Modell, das darauf trainiert ist, mit immer derselben technischen Ausstattung immer nur Weizen zu ernten, ist technisch einfacher realisierbar als ein KI-Modell, das jegliche landwirtschaftliche Arbeitsaufgabe mit beliebiger Ausstattung erledigen kann.

Es besteht somit das ganz allgemeine Problem, dass autonome landwirtschaftliche Universal-Arbeitsmaschinen effektiv an die jeweilige landwirtschaftliche Arbeitsaufgabe angepasst werden müssen.

Für bemannte landwirtschaftliche Arbeitsmaschinen ist das Prinzip bekannt, Datensätze mittels eines Datenkonfigurators so zusammenzustellen, dass sie ganz spezifisch auf die Bedürfnisse einer landwirtschaftlichen Arbeitsmaschine zugeschnitten sind (DE 10 2006 030 970 A1).

Weiter ist bekannt, verfügbare Maschinenressourcen in Bezug auf Erntezeitfenster unterschiedlicher Akteure frühzeitig und abgestimmt zu verplanen (DE 10 2006 045 280 A1).

Zudem ist bekannt, dass die Planung von Maschinenressourcen in Stufen erfolgen kann und ausgehend von einer frühen Grobplanung über eine kurz vor Einsatzbeginn liegende Feldplanung zu einer einsatzspezifischen Feinplanung übergeht (EP 2 174 537 A1).

Im Bereich der autonomen Automobile wird schon länger als zukünftige Lösung zur Effizienzsteigerung die Idee diskutiert, dass einzelne Nutzer kein eigenes Automobil mehr besitzen, sondern eines nach Bedarf anmieten. So ließe sich die Auslastung der autonomen Automobile deutlich erhöhen. Vor dem Hintergrund begrenzter Ressourcen stellt diese Idee eine der wenigen technischen Lösungen bereit, die den Ressourcenverbrauch massiv senken könnten. Allerdings ist es bei Automobilen so, dass sich ihr Einsatzzweck, ihre Ausstattung und die Umweltbedingungen oft im selben Rahmen bewegen.

Ganz anders ist die Situation bei autonomen landwirtschaftlichen Universal-Arbeitsmaschinen. Eine autonome landwirtschaftliche Universal-Arbeitsmaschine kann nicht ohne Weiteres für beliebige landwirtschaftliche Arbeitsaufgaben eingesetzt werden. Es bedarf jeweils eines Konfigurationswechsels im Bereich der Ausstattung und/oder Software.

Auch die Effizienz der Durchführung landwirtschaftlicher Arbeitsaufgaben, insbesondere Feldbearbeitungen, beruht auf komplexen Wechselwirkungen zwischen der Umwelt, der autonomen landwirtschaftlichen Universal-Arbeitsmaschine, ihrer Ausstattung mit Arbeitsaggregaten, ihrem Wartungszustand, den verfügbaren Betriebsmitteln und dergleichen, sowie ihrer Software und deren Datenbasis.

Hinzu kommen wirtschaftliche Hürden, die dafür sorgen, dass nicht jeder Landwirt sich eine oder mehrere autonome landwirtschaftliche Universal-Arbeitsmaschinen anschaffen kann und rechtliche Hürden, die deren Einsatz begrenzen und beispielsweise eine Straßenfahrt zwischen unterschiedlichen Feldern verbieten können. Insgesamt fehlt also eine Lösung, die es ermöglicht, die Auslastung der wirtschaftlich und ressourcentechnisch teuren autonomen landwirtschaftlichen Universal-Arbeitsmaschinen zu steigern, um einen technischen Beitrag zur Vermeidung von Ressourcenverschwendung zu liefern. Diese Lösung muss dabei technische, wirtschaftliche und rechtliche Probleme berücksichtigen.

Das obige Problem wird durch die Merkmale von Anspruch 1 gelöst.

Wesentlich ist die grundsätzliche Überlegung, dass autonome landwirtschaftliche Universal-Arbeitsmaschinen zur Durchführung einer Vielzahl unterschiedlicher landwirtschaftlicher Arbeitsaufgaben konfigurierbar ausgestaltet werden können, dass diese autonomen landwirtschaftlichen Universal-Arbeitsmaschinen als Akteure in einem landwirtschaftlichen Arbeitsnetzwerk betrachtet werden können und dass zu ihrer Koordinierung ein Schwarmassistenzsystem vorgesehen sein kann. Dieses Schwarmassistenzsystem koordiniert zu erledigende landwirtschaftliche Arbeitsaufgaben mit technischen und zeitlichen Kapazitäten von landwirtschaftlichen Universal-Arbeitsmaschinen und führt eine Zuweisung von autonomen landwirtschaftlichen Universal-Arbeitsmaschinen zu angefragten landwirtschaftlichen Arbeitsaufgaben durch. Diese Zuweisung inklusive notwendiger Unterstützungsleistungen sowie allgemein der technischen und wirtschaftlichen Abwicklung wird vorliegend als Vermietung bezeichnet.

Im Einzelnen wird ein Schwarmassistenzsystem für autonome landwirtschaftliche Universal-Arbeitsmaschinen, vorgeschlagen, wobei das Schwarmassistenzsystem in ein landwirtschaftliches Arbeitsnetzwerk einbindbar ist, wobei das landwirtschaftliche Arbeitsnetzwerk autonome landwirtschaftliche Universal-Arbeitsmaschinen als Anbieter von landwirtschaftlichen Arbeitsaufgaben und Abnehmer von landwirtschaftlichen Arbeitsaufgaben miteinander und mit dem Schwarmassistenzsystem verbindet, wobei die autonomen landwirtschaftlichen Universal-Arbeitsmaschinen zur Durchführung einer Vielzahl unterschiedlicher landwirtschaftlicher Arbeitsaufgaben konfigurierbar sind, indem sie mit wechselnden Arbeitsaggregaten ausgestattet werden, wobei das Schwarmassistenzsystem eingerichtet ist, eine angefragte landwirtschaftliche Arbeitsaufgabe betreffende Anfragedaten von den Abnehmern entgegenzunehmen, die Anfragedaten mit Kapazitätsdaten mindestens einer der landwirtschaftlichen Universal-Arbeitsmaschinen abzugleichen und basierend auf dem Ergebnis des Abgleichs eine Vermietung mindestens einer landwirtschaftlichen Universal-Arbeitsmaschine zur Durchführung der angefragten landwirtschaftlichen Arbeitsaufgabe durchzuführen.

Gemäß Anspruch 2 stellt das Schwarmassistenzsystem der autonomen landwirtschaftlichen Universal-Arbeitsmaschine Prozesswissen zur Durchführung der landwirtschaftlichen Arbeitsaufgabe zur Verfügung. Das Ermitteln und zur Verfügung stellen des Prozesswissens durch das Schwarmassistenzsystem ermöglicht die einfache Nutzung der autonomen landwirtschaftlichen Universal-Arbeitsmaschine für nahezu beliebige landwirtschaftliche Arbeitsaufgaben. Es wird möglich, die autonome landwirtschaftliche Universal-Arbeitsmaschine für jede der landwirtschaftlichen Arbeitsaufgaben zu individualisieren. So kann die Ressourceneffizienz von autonomen landwirtschaftlichen Universal-Arbeitsmaschinen mit der Bearbeitungseffizienz von individualisierten landwirtschaftlichen Arbeitsmaschinen kombiniert werden. Im Ergebnis ermöglicht das vorschlagsgemäße Schwarmassistenzsystem eine Arbeitsteilung zwischen den autonomen landwirtschaftlichen Universal-Arbeitsmaschinen, die die landwirtschaftliche Arbeitsaufgabe durchführen und dem Schwarmassistenzsystem, das diese auf einer breiten Datenbasis planen kann. Die so entstehende Modularität der physischen und datentechnischen Komponenten erlaubt einen flächendeckenden und technisch sinnvollen Einsatz autonomer landwirtschaftlicher Universal-Arbeitsmaschinen.

Bei einer Ausgestaltung gemäß Anspruch 3 umfassen die Anfragedaten zumindest Feldinformationsdaten. Bei den Feldinformationsdaten kann es sich beispielsweise um Feldbestandsdaten wie Fruchtdaten, Feldabmessungen und dergleichen handeln. Zusätzlich oder alternativ können die Kapazitätsdaten zumindest Maschinendaten wie eine mögliche Motorleistung, einen Wartungszustand und dergleichen umfassen. Von herkömmlichen landwirtschaftlichen Arbeitsmaschinen ist es bekannt, derartige Daten zur Steigerung der Effizienz einer Feldbearbeitung oder dergleichen zusammenzuführen. Bei einer weiteren Ausgestaltung gemäß Anspruch 3 werden Anfragedaten einer Vielzahl von Abnehmern und Kapazitätsdaten eines Schwarms autonomer landwirtschaftlicher Universal-Arbeitsmaschinen zusammengeführt, um einen Schwarmvermietungsplan zu ermitteln, der nicht nur hinsichtlich einer einzelnen landwirtschaftlichen Arbeitsaufgabe, sondern hinsichtlich aller landwirtschaftlichen Arbeitsaufgaben möglichst optimiert ist. Durch die Austauschbarkeit der autonomen landwirtschaftlichen Universal-Arbeitsmaschine und die Individualisierbarkeit dieser mit dem ermittelten Prozesswissen kann so gegenüber herkömmlichen Systemen eine weitere Effizienzsteigerung erzielt werden. Im Wesentlichen kann die beste Arbeitsmaschine pro landwirtschaftlicher Arbeitsaufgabe eingesetzt werden. Dadurch, dass auch die autonomen landwirtschaftlichen Universal-Arbeitsmaschinen bezüglich ihrer Arbeitsaggregate individualisierbar sind, wird dieses Prinzip noch vertieft.

Anspruch 4 betrifft die Möglichkeit, den Schwarmvermietungsplan schrittweise zu verbessern oder zu aktualisieren. Dies trägt dem Umstand Rechnung, dass sich Randbedingungen wie Umweltdaten, insbesondere Wetterdaten, aber auch angefragte landwirtschaftliche Arbeitsaufgaben und die Verfügbarkeit von Arbeitsaggregaten und autonomen landwirtschaftlichen Universal-Arbeitsmaschinen mit der Zeit ändern können. Durch die Anpassung des Schwarmvermietungsplans wird insgesamt eine Optimierung mit der Zeit sichergestellt.

Anspruch 5 betrifft die Möglichkeit, den Schwarmvermietungsplan durch eine Simulation unterschiedlicher Kombinationen und Konfigurationen der autonomen landwirtschaftlichen Universal-Arbeitsmaschine zu ermitteln. Dadurch, dass das Prozesswissen, das der autonomen landwirtschaftlichen Universal-Arbeitsmaschine zur Verfügung gestellt wird, jeweils prozessabhängig ist und die Effizienz der Durchführung der landwirtschaftlichen Arbeitsaufgabe bestimmt, hängt die Zuordnung der autonomen landwirtschaftlichen Universal-Arbeitsmaschinen zu den angefragten Arbeitsleitungen sozusagen von sich selbst ab. Dieses Problem kann mittels iterativer Simulationsschritte gelöst werden.

Bei einer bevorzugten Ausgestaltung gemäß Anspruch 6 steuert das Schwarmassistenzsystem die Durchführung des Schwarmvermietungsplans. Demnach kann das Schwarmassistenzsystem in einer Ausgestaltung als übergeordnete Instanz verstanden werden, die essenziell für die Durchführung der Vielzahl der landwirtschaftlichen Arbeitsaufgaben ist. Sie ermittelt das individuelle Prozesswissen und befähigt somit die autonomen landwirtschaftlichen Universal-Arbeitsmaschinen und kann in einer Ausgestaltung sogar die Logistik des Schwarms der autonomen landwirtschaftlichen Universal-Arbeitsmaschinen sowie ihrer Arbeitsaggregate koordinieren. Tatsächlich wird es so möglich, dass einzelne Landwirte oder Vermietungsanbieter kleine oder größere Teile des Schwarms zur Verfügung stellen, ggf. autonome landwirtschaftliche Universal-Arbeitsmaschinen eines Anbieters mit Arbeitsaggregaten eines anderen Anbieters kombiniert werden und bei der Erstellung des Schwarm-Vermietungsplans auch berücksichtigt wird, das die jeweiligen autonomen landwirtschaftlichen Universal-Arbeitsmaschinen, die ggf. nicht für eine eigenständige Straßenfahrt freigegeben sind zum Ort ihrer landwirtschaftlichen Arbeitsaufgabe transportiert werden müssen und vorher oder vor Ort mit den Arbeitsaggregaten ausgestattet werden müssen. Durch die Berücksichtigung der Logistik wird die erreichbare Effizienz weiter gesteigert. Somit bieten die vorschlagsgemäßen Ausgestaltungen einen technischen Beitrag zur Er-zeugung landwirtschaftlicher Güter bei knappen Ressourcen.

Bei einer weiteren bevorzugten Ausgestaltung gemäß Anspruch 7 ist vorgesehen, dass die Anfragedaten ein quantitatives Arbeitsergebnis umfassen können. Für den einzelnen Landwirt beispielsweise als Abnehmer der landwirtschaftlichen Arbeitsaufgabe ist oft weder transparent noch wichtig, welche technischen Mittel eingesetzt werden, um die landwirtschaftliche Arbeitsaufgabe durchzuführen. Der Landwirt beispielsweise steht vor der Aufgabe, sein Feld abzuernten. In vielen Fällen wird es dem Landwirt gar nicht möglich sein, abzuschätzen, welche technischen Rahmenbedingungen er dafür bestellen müsste. Daher wird vorgeschlagen, die technische Ausgestaltung dem Schwarmassistenzsystem zu überlassen. Der Landwirt bestellt also beispielsweise das Abernten eines Feldes einer bestimmten Größe mit einer bestimmten Frucht und das Schwarmassistenzsystem stellt die Erreichung dieses Zieles, soweit möglich, sicher.

Anspruch 8 betrifft allgemein die Routenplanung. Einerseits ist die Routenplanung ein Aspekt, der wesentlich zur Bearbeitungseffizienz beiträgt, andererseits hat die Routenplanung, beispielsweise aufgrund von Bodenverdichtung, aber auch bei zusätzlicher Erbringung von Nebenleistungen wie einem Abtransport von Erntegut oder einem Anliefern anderer Betriebsmittel Einfluss auf die Zusammenarbeit zwischen autonomen landwirtschaftlichen Universal-Arbeitsmaschinen und Abnehmern. Deswegen kann vorgesehen sein, dass die Routenplanung vom Abnehmer selbst vorgegeben wird, oder, dass das Schwarmassistenzsystem diese ermittelt. Vorzugsweise ist das Schwarmassistenzsystem eingerichtet, mit beiden Alternativen umzugehen.

Die Ansprüche 9 und 10 betreffen zwei alternative Ausgestaltungen des Schwarmassistenzsystems. Gemäß Anspruch 9 kann vorgesehen sein, dass das Schwarmassistenzsystem zumindest teilweise dezentral angeordnet ist. Das landwirtschaftliche Arbeitsnetzwerk kann dann beispielsweise ein sich selbst organisierendes Netzwerk sein, bei dem unterschiedliche Teilnehmer Teile der Rechenkapazität zur Verfügung stellen und teilweise Aufgaben erledigen. Alternativ kann gemäß Anspruch 10 ein zentrales Schwarmassistenzsystem vorgesehen sein.

Nach einer weiteren Lehre gemäß Anspruch 11, der eigenständige Bedeutung zukommt, wird ein Verfahren zum Durchführen einer landwirtschaftlichen Arbeitsaufgabe beansprucht.

Dabei ist wesentlich, dass ein in ein landwirtschaftliches Arbeitsnetzwerk ein-gebundenes Schwarmassistenzsystem vorhanden ist, dass das landwirtschaftliche Arbeitsnetzwerk autonome landwirtschaftliche Universal-Arbeitsmaschinen als Anbieter von landwirtschaftlichen Arbeitsaufgaben zur Feldbearbeitung und Abnehmer von landwirtschaftlichen Arbeitsaufgaben miteinander und dem Schwarmassistenzsystem verbindet, dass die autonomen Universal-Arbeitsmaschinen zur Durchführung einer Vielzahl unterschiedlicher landwirtschaftlicher Arbeitsaufgaben konfigurierbar sind, indem sie mit wechselnden Arbeitsaggregaten ausgestattet werden, dass das Schwarmassistenzsystem eingerichtet ist, eine angefragte landwirtschaftliche Arbeitsaufgabe betreffende Anfragedaten von den Abnehmern entgegenzunehmen, die Anfragedaten mit Kapazitätsdaten mindestens einer der landwirtschaftlichen Universal-Arbeitsmaschinen abzugleichen und basierend auf dem Ergebnis des Abgleichs eine Vermietung mindestens einer landwirtschaftlichen Universal-Arbeitsmaschine zur Durchführung der angefragten landwirtschaftlichen Arbeitsaufgabe durchzuführen und dass die landwirtschaftliche Universal-Arbeitsmaschine die angefragte landwirtschaftliche Arbeitsaufgabe durchführt.

Auf alle Ausführungen zu dem vorschlagsgemäßen Schwarmassistenzsystem darf verwiesen werden.

Bei einer Ausgestaltung gemäß Anspruch 12 kann vorgesehen sein, dass die autonomen landwirtschaftlichen Universal-Arbeitsmaschinen sich selbst vermieten. Beispielsweise kann der Besitzer einen Rahmen der Vermietung vorgeben und die autonome landwirtschaftliche Universal-Arbeitsmaschine handelt in Kooperation mit dem Schwarmassistenzsystem die Vermietung selbst aus. Interessant ist die Selbstvermietung auch, wenn das Schwarmassistenzsystem dezentral ausgestaltet ist. So oder so würde das Schwarmassistenzsystem durch notwendige Zustimmungen von menschlichen Akteuren deutlich verlangsamt.

Nach einer weiteren Lehre gemäß Anspruch 13, der ebenfalls eigenständige Bedeutung zukommt, wird eine autonome landwirtschaftliche Arbeitsmaschine eingerichtet zur Verwendung in dem vorschlagsgemäßen Verfahren beansprucht.

Auf alle Ausführungen zu dem vorschlagsgemäßen Schwarmassistenzsystem und dem vorschlagsgemäßen Verfahren darf verwiesen werden.

Nach einer weiteren Lehre gemäß Anspruch 14, der ebenfalls eigenständige Bedeutung zukommt, wird ein Computerprogrammprodukt umfassend Befehle, die bei ihrer Ausführung eine Recheneinheit veranlassen, als vorschlagsgemäßes Schwarmassistenzsystem zu funktionieren, beansprucht.

Auf alle Ausführungen zu dem vorschlagsgemäßen Schwarmassistenzsystem, dem vorschlagsgemäßen Verfahren und der vorschlagsgemäßen autonomen landwirtschaftlichen Arbeitsmaschine darf verwiesen werden.

Im Folgenden wird die Erfindung anhand einer lediglich Ausführungsbeispiele darstellenden Zeichnung näher erläutert. In der Zeichnung zeigt
- Fig. 1: schematisch das landwirtschaftliche Arbeitsnetzwerk,
- Fig. 2: die Durchführung einer landwirtschaftlichen Arbeitsaufgabe,
- Fig. 3: die Durchführung einer weiteren landwirtschaftlichen Arbeitsaufgabe,
- Fig. 4: einen Schwarmvermietungsplan und schematisch sein Zustandekommen und
- Fig. 5: zwei autonome landwirtschaftliche Universal-Arbeitsmaschinen, die als Feldhäcksler zusammenarbeiten.

Ein beispielhafter Anwendungsfall ist vorliegend ein Erntevorgang als durchzuführende landwirtschaftliche Arbeitsaufgabe. Dieser Erntevorgang umfasst beispielhaft die Prozesskette aus den landwirtschaftlichen Arbeitsaufgaben "Abernten eines Feldbestandes" und "Bergung des Erntegutes".

In der Regel wird diese Prozesskette so abgearbeitet, dass zunächst eine oder mehrere als Mähdrescher 1 ausgeführte landwirtschaftliche Arbeitsmaschinen den auf einer Anbaufläche 2 gewachsenen Feldbestand 3 abernten. Beispiehaft wird der von den Fruchtständen gebildete Teil des Erntegutes auf dem Mähdrescher 1 in einem Korntank zwischengespeichert während der verbleibende Teil des Erntegutes, das Stroh, in Schwaden auf der Anbaufläche 2 abgelegt wird. Hat das in Schwaden abgelegte Stroh einen die Einlagerung des Strohs zulassenden Feuchtegehalt erreicht, verpresst eine von einem Schlepper gezogene Ballenpresse das Stroh zu Erntegutballen, die zunächst auf der Anbaufläche 2 abgelegt werden.

In einem weiteren Arbeitsgang der Prozesskette werden die Erntegutballen beispielsweise mittels sogenannter Hubstapler auf von Schleppern gezogene Pritschenanhänger verladen und zur Einlagerung abtransportiert. In analoger Weise werden die im Korntank zwischengespeicherten Fruchtstände von schleppergezogenen Transportanhängern übernommen und zur Einlagerung oder Weiterverarbeitung geführt.

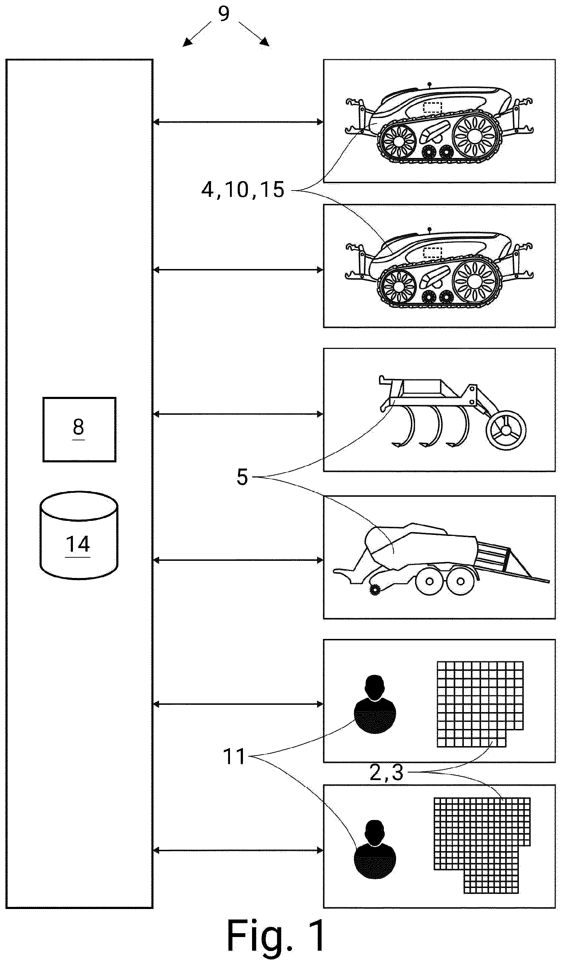

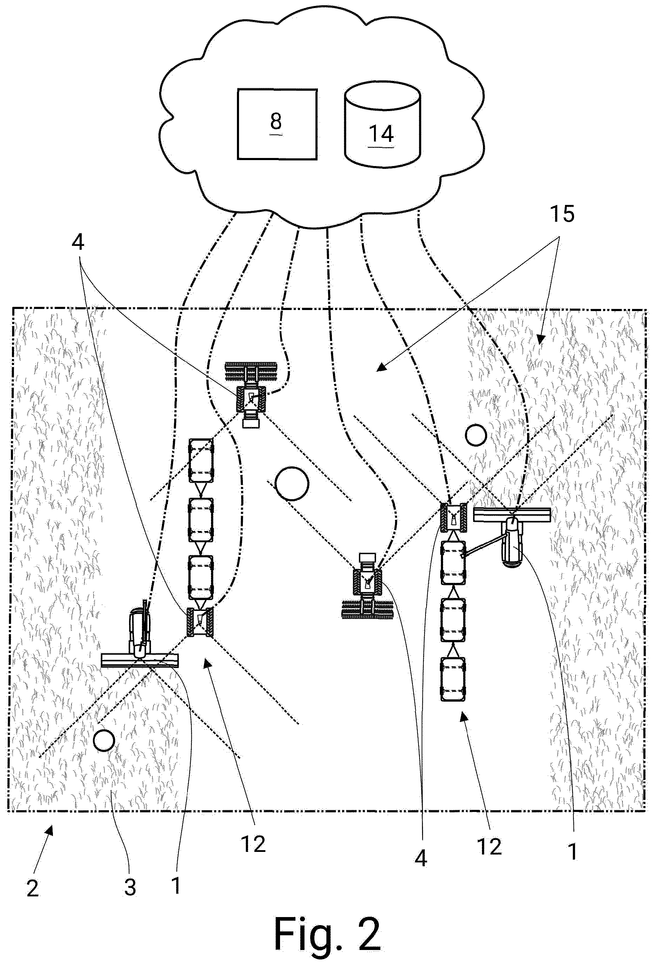

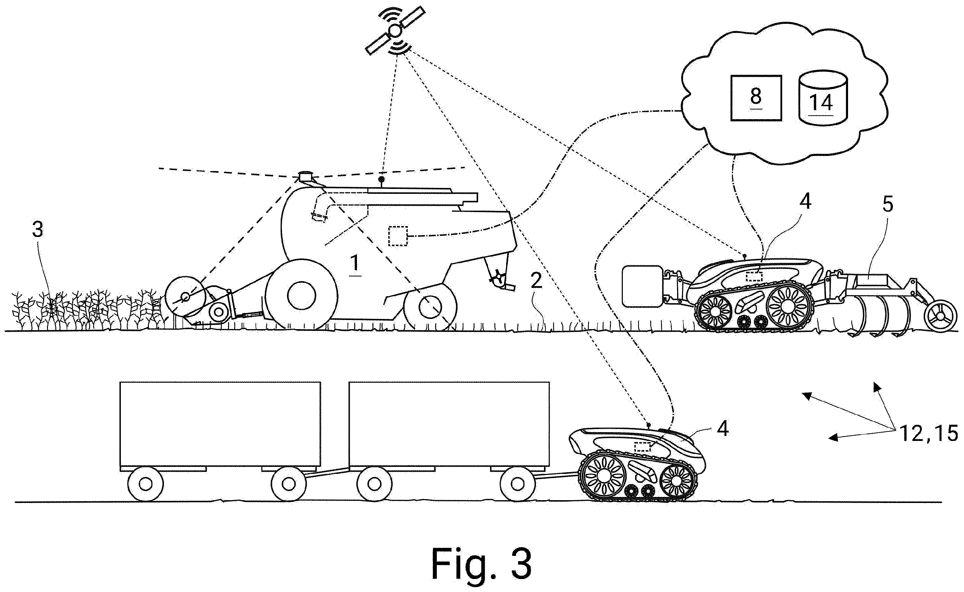

Im vorliegenden Fall können nun eine oder mehrere dieser Tätigkeiten von autonomen landwirtschaftlichen Universal-Arbeitsmaschinen 4 in unterschiedlichen Konfigurationen übernommen werden. Fig. 1 zeigt schematisch, wie die autonomen landwirtschaftlichen Universal-Arbeitsmaschinen 4 technisch unterstützt werden können. Dies wird im Einzelnen noch erläutert. Fig. 2 zeigt beispielsweise die Zusammenarbeit von vier autonomen landwirtschaftlichen Universal-Arbeitsmaschinen 4 und zwei autonomen Mähdreschern 1 bei der Ernte. Fig. 3 zeigt ebenfalls eine Zusammenarbeit zwischen autonomen landwirtschaftlichen Universal-Arbeitsmaschinen 4 und einem Mähdrescher 1.

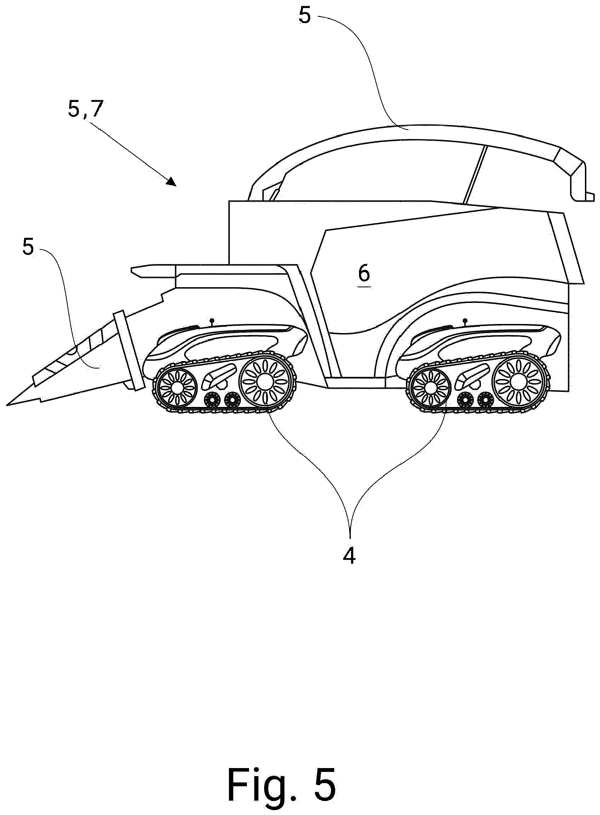

Alternativ ist auch denkbar, dass die autonomen landwirtschaftlichen Universal-Arbeitsmaschinen 4 durch Konfigurationsänderungen, also insbesondere durch Ausstattung mit entsprechenden Arbeitsaggregaten 5, als Mähdrescher 1 verwendet werden. Denkbar ist beispielsweise, dass ein Rumpf-Feldhäcksler 6 als Arbeitsaggregat 5 mit wenig Elektronik und ohne Fahrantrieb mittels einer oder mehrerer autonomer landwirtschaftlicher Universal-Arbeitsmaschinen 4 betrieben wird, indem die autonomen landwirtschaftlichen Universal-Arbeitsmaschinen 4 als Fahrantrieb und Steuerung dienen und an den Rumpf-Feldhäcksler 6 andockbar sind. Eine derartige Ausgestaltung zeigt Fig. 5, in der zwei autonome landwirtschaftliche Universal-Arbeitsmaschinen 4 einen Rumpf-Feldhäcksler 6 antreiben, teilweise steuern, mit Energie versorgen und so gemeinsam als Feldhäcksler 7 fungieren.

Vorgeschlagen wird nun ein in Fig. 1 dargestellten Schwarmassistenzsystem 8 für autonome landwirtschaftliche Universal-Arbeitsmaschinen 4. Das Schwarmassistenzsystem 8 ist in ein landwirtschaftliches Arbeitsnetzwerk 9 einbindbar, wobei das landwirtschaftliche Arbeitsnetzwerk 9 autonome landwirtschaftliche Universal-Arbeitsmaschinen 4 als Anbieter 10 von landwirtschaftlichen Arbeitsaufgaben und Abnehmer 11 von landwirtschaftlichen Arbeitsaufgaben miteinander und mit dem Schwarmassistenzsystem 8 verbindet und wobei die autonomen landwirtschaftlichen Universal-Arbeitsmaschinen 4 zur Durchführung einer Vielzahl unterschiedlicher landwirtschaftlicher Arbeitsaufgaben konfigurierbar sind, indem sie mit wechselnden Arbeitsaggregaten 5 ausgestattet werden.

Fig. 1 zeigt ein landwirtschaftliches Arbeitsnetzwerk 9, in dem ein Schwarmassistenzsystem 8 und mehrere Anbieter 10 und Abnehmer 11 verbunden sind.

Das Schwarmassistenzsystem 8 ist eingerichtet, eine angefragte landwirtschaftliche Arbeitsaufgabe betreffende Anfragedaten von den Abnehmern 11 entgegenzunehmen, die Anfragedaten mit Kapazitätsdaten mindestens einer der landwirtschaftlichen Universal-Arbeitsmaschinen 4 abzugleichen und basierend auf dem Ergebnis des Abgleichs eine Vermietung mindestens einer landwirtschaftlichen Universal-Arbeitsmaschine 4 zur Durchführung der angefragten landwirtschaftlichen Arbeitsaufgabe durchzuführen.

Bei einer autonomen landwirtschaftlichen Universal-Arbeitsmaschine 4 handelt es sich um eine Arbeitsmaschine, die autonom, also ohne engmaschige Nutzerüberwachung und auf Basis eigener Aktionen eine landwirtschaftliche Arbeitsaufgabe ausführen kann. Hier handelt es sich bei der autonomen landwirtschaftlichen Universal-Arbeitsmaschine 4 um eine unbemannte Arbeitsmaschine. Sie kann alleine oder im Verbund 12, insbesondere mit einer bemannten landwirtschaftlichen Arbeitsmaschine tätig sein. So kann sie die autonome landwirtschaftliche Arbeitsmaschine beispielsweise entlang einer Fahrspur einer bemannten landwirtschaftlichen Arbeitsmaschine bewegen oder aber anhand von GPS-Daten selbsttätig ihre Fahrspur ermittelt.

Weiterhin ist die autonome landwirtschaftliche Universal-Arbeitsmaschine 4 zur Durchführung einer Vielzahl unterschiedlicher landwirtschaftlicher Arbeitsaufgaben konfigurierbar, insbesondere durch den Austausch bzw. das Anbringen von Arbeitsaggregaten 5.

Vorzugsweise kann vorgesehen sein, dass bei einer autonomen landwirtschaftlichen Universal-Arbeitsmaschine 4 bei einem Wechsel des Arbeitsaggregats 5 zusätzlich ein Wechsel von Steuerungsbaugruppen erfolgt, die das Arbeitsaggregat 5 betreffen, oder, dass Steuerungsbaugruppen hinzugefügt werden. Auch möglich ist, dass zwei oder mehr als zwei autonome landwirtschaftliche Universal-Arbeitsmaschinen 4 gemeinsam ein Arbeitsaggregat 5 betreiben (Fig. 5), also dass beispielsweise zwei autonome landwirtschaftliche Universal-Arbeitsmaschinen 4 zusammen mit einer größeren Tragstruktur mit diversen Arbeitsaggregaten 5 als Feldhäcksler, Mähdrescher oder anderes fungieren.

Die Anbieter 10 sind die autonomen landwirtschaftlichen Universal-Arbeitsmaschinen 4 selbst, die sich gegebenenfalls in einem vorgegebenen Rahmen, wie noch erläutert wird, selbst vermieten und somit Anbieter 10 im engen Sinne sind. Alternativ können die autonomen landwirtschaftlichen Universal-Arbeitsmaschinen 4 Anbieter 10 im weiten Sinne sein, die zwar die landwirtschaftliche Arbeitsaufgabe durchführen und dafür angeboten werden, die jedoch an der technischen und/oder wirtschaftlichen Abwicklung nicht oder wenig beteiligt sind.

Das Schwarmassistenzsystem 8 kann das Zentrum des landwirtschaftlichen Arbeitsnetzwerkes 9 sein, bei dem alle Kommunikation zusammenläuft, genauso ist aber auch ein dezentrales landwirtschaftlichen Arbeitsnetzwerk 9 und/oder ein dezentrales Schwarmassistenzsystem 8 oder eine Mischform möglich. Hier und vorzugsweise steht das Schwarmassistenzsystem 8 mit einem Farm Management Information System in Verbindung oder ist ein Teil davon.

Das Schwarmassistenzsystem 8 umfasst Hardware, insbesondere eine Recheneinheit. Das Schwarmassistenzsystem 8 kann rein cloudbasiert oder rein lokal ausgestaltet sein oder mehrere Recheneinheiten umfassen. In einer hier nicht näher beleuchteten Variante ist das Schwarmassistenzsystem 8 vollständig auf der autonomen landwirtschaftlichen Universal-Arbeitsmaschine 4 angeordnet und dort als Modul ausgestaltet, das mit der Steuerung der autonomen landwirtschaftlichen Universal-Arbeitsmaschine 4 kommuniziert, jedoch software- und vorzugsweise hardwaretechnisch von dieser getrennt ausgestaltet ist. Hier ist das Schwarmassistenzsystem 8 extern zu der autonomen landwirtschaftlichen Universal-Arbeitsmaschine 4 angeordnet.

Die Kapazitätsdaten umfassen hier und vorzugsweise zeitliche Kapazitätsdaten und technische Kapazitätsdaten. Die technischen Kapazitätsdaten können beispielsweise eine Maschinenleistung, eine Kompatibilität mit Arbeitsaggregaten 5 und dergleichen umfassen.

Die autonomen landwirtschaftlichen Universal-Arbeitsmaschinen 4 können alleine oder als Verbund 12 die landwirtschaftliche Arbeitsaufgabe durchführen. Der Verbund 12 kann vollständig aus autonomen landwirtschaftlichen Universal-Arbeitsmaschinen 4 bestehen. Hier und vorzugsweise kann der Verbund 12 jedoch auch nicht-autonome landwirtschaftliche Arbeitsmaschinen umfassen, die keine Universal-Arbeitsmaschinen 4 sind. Fig. 2 zeigt beispielsweise einen Verbund 12 aus autonomen landwirtschaftlichen Universal-Arbeitsmaschinen 4 und Mähdreschern 1. Hier und vorzugsweise kann vorgesehen sein, dass das Schwarmassistenzsystem 8 auch autonome landwirtschaftliche Arbeitsmaschinen vermietet, die keine Universal-Arbeitsmaschinen 4 sind. Insbesondere kann das Schwarmassistenzsystem 8 Verbünde aus autonomen landwirtschaftlichen Universal-Arbeitsmaschinen 4 und anderen autonomen landwirtschaftlichen Arbeitsmaschinen vermieten.

Hier und vorzugsweise koordiniert das Schwarmassistenzsystem 8 den Verbund 12. Dafür kann das Schwarmassistenzsystem 8 die Kommunikation zwischen den autonomen landwirtschaftlichen Arbeitsmaschinen des Verbundes 12 regeln, insbesondere kann die Kommunikation über das Schwarmassistenzsystem 8 stattfinden.

Der Verbund 12 kann als Master-Slave-Verbund organisiert sein. Möglich ist daher auch, dass der Master in dem Verbund 12, insbesondere eine autonome landwirtschaftliche Arbeitsmaschine, als Abnehmer 11 agiert. Es kann daher vorgesehen sein, dass eine mit einer landwirtschaftlichen Arbeitsaufgabe betraute autonome landwirtschaftliche Arbeitsmaschine sich Slave-Universal-Arbeitsmaschinen selbsttätig nach Bedarf mietet oder diese Miete zumindest einem Nutzer vorschlägt.

So kann im vorliegenden Beispiel das Schwarmassistenzsystem 8 entweder den kompletten Verbund 12 vermieten, wenn ein Nutzer als Abnehmer 11 die Ernte von beispielsweise Weizen auf seinem Feld als landwirtschaftliche Arbeitsaufgabe anfragt oder der Nutzer beauftragt beispielsweise seinen eigenen autonomen Mähdrescher 1 mit der Ernte und dieser bestellt selbsttätig autonome landwirtschaftliche Universal-Arbeitsmaschinen 4 zur Unterstützung.

Der Begriff "Vermietung" umfasst hier und vorzugsweise den vollständigen Prozess von der Abstimmung über die Zuweisung der autonomen landwirtschaftlichen Arbeitsmaschine zur Aufgabe, vorzugsweise das Versorgen mit Prozesswissen, vorzugsweise eine Logistik, bis hin zur Abrechnung und jene wirtschaftlich-technischen Aspekte, die sich aus der Autonomie ergeben, insbesondere Haftungsfragen und Betriebserlaubnisfragen, die wiederum auf Maschinendaten, Wartungsprotokollen usw. basieren. Somit werden die Aspekte, die einen einzelnen Nutzer gegebenenfalls von einer Anschaffung einer autonomen landwirtschaftlichen Arbeitsmaschine abhalten, übernommen.

Weiter ist hier und vorzugsweise vorgesehen, dass das Schwarmassistenzsystem 8 eingerichtet ist, für die Durchführung der landwirtschaftlichen Arbeitsaufgabe bestimmtes Prozesswissen für die autonome landwirtschaftliche Universal-Arbeitsmaschine 4 aus den Anfragedaten, den Kapazitätsdaten und vorzugsweise zusätzlich aus allgemeinen Prozessdaten und/oder die angefragte Arbeitsaufgabe betreffenden spezifischen Prozessdaten und/oder zusätzlich aus Umweltdaten, insbesondere Wetterdaten, zu ermitteln und der vermieteten autonomen landwirtschaftlichen Universal-Arbeitsmaschine 4 zur Durchführung der landwirtschaftlichen Arbeitsaufgabe zu übermitteln.

Derartiges Prozesswissen kann optimierte Einstellungen von Maschinenparametern und/oder Parametrisierungen von Softwaremodulen und/oder Gewichte von neuronalen Netzwerken und/oder eine Routenplanung 13 und/oder eine Optimierungsstrategie oder dergleichen umfassen. Die spezifischen Prozessdaten umfassen beispielsweise Feldinformationsdaten wie eine Fruchtart eines Feldbestandes 3 und/oder eine Bodenart und/oder eine Bodensteigung und/oder feldunabhängige Prozessdaten wie vorhandene Betriebsmittel und/oder vorhergehende und/oder nachfolgende Arbeitsschritte. Die allgemeinen Prozessdaten umfassen unspezifische Prozessdaten wie beispielsweise optimierte Einstellungen der autonomen landwirtschaftlichen Universal-Arbeitsmaschine 4 für einen Erntevorgang. Umweltdaten sind solche Daten, die nicht direkt das Feld betreffen, sondern allgemein eine größere Umgebung, beispielsweise Wetterdaten, Temperaturdaten und dergleichen. Das Prozesswissen wird von der autonomen landwirtschaftlichen Universal-Arbeitsmaschine 4 zur Durchführung der landwirtschaftlichen Arbeitsaufgabe genutzt, insbesondere nutzt die autonome landwirtschaftliche Universal-Arbeitsmaschine 4 das Prozesswissen, um damit Maschinenparameter einzustellen.

Hier und vorzugsweise umfasst das Prozesswissen zumindest für einige, vor-zugsweise für alle, Arbeitsaggregate 5, mit denen die autonome landwirtschaftliche Universal-Arbeitsmaschine 4 ausgerüstet werden kann, arbeitsaggregatspezifisches Arbeitsaggregatwissen. Hier und vorzugsweise ist es dann so, dass die autonome landwirtschaftliche Universal-Arbeitsmaschine 4 für einige oder alle Arbeitsaggregate 5, mit denen sie ausgerüstet werden kann, jedenfalls in einer Grund- oder Werkskonfiguration, kein arbeitsaggregatspezifisches Arbeitsaggregatwissen aufweist. Alternativ kann die autonome landwirtschaftliche Universal-Arbeitsmaschine 4 für einige oder alle Arbeitsaggregate 5, mit denen sie ausgerüstet werden kann, jedenfalls in der Grund- oder Werkskonfiguration, arbeitsaggregatstypspezifisches Arbeitsaggregatwissen aufweisen. So kann die autonome landwirtschaftliche Universal-Arbeitsmaschine 4 beispielsweise einen grundsätzlichen Satz an pflugspezifischem Arbeitsaggregatwissen aufweisen, jedoch von dem Schwarmassistenzsystem 8 mit Arbeitsaggregatwissen betreffend den exakten Pflugtyp ausgestattet werden, das eine effizientere Verwendung des Pfluges erlaubt.

Vorzugsweise ist daher vorgesehen, dass die autonome landwirtschaftliche Universal-Arbeitsmaschine 4 derart ausgestaltet ist, dass sie ohne das arbeitsaggregatspezifische Arbeitsaggregatwissen das jeweilige Arbeitsaggregat 5 nicht oder nur auf Basis des arbeitsaggregatstypspezifischen Arbeitsaggregatwissen verwenden kann.

Bei den Maschinenparametern kann es sich um Maschinenparameter im engen Sinne wie die Motordrehzahl oder eine Position einer Drosselklappe handeln. Ebenso sind Einstellungen eines Heckkrafthebers oder dergleichen umfasst. Die Maschinenparameter können auch Anweisungen an Einstellautomaten oder andere Steuerungssysteme der autonomen landwirtschaftlichen Universal-Arbeitsmaschine 4 umfassen, aus denen dann Maschinenparameter im engen Sinne generiert werden.

Die allgemeinen Prozessdaten und oder die Umweltdaten stammen vorzugsweise aus einer Datenquelle, die weder einem Anbieter 10 noch einem Abnehmer 11 der spezifischen Arbeitsaufgabe zugeordnet ist.

Ebenfalls ist hier und vorzugsweise vorgesehen, dass die Anfragedaten zumindest Feldinformationsdaten umfassen. Üblicherweise ist der Abnehmer 11 die Quelle der Feldinformationsdaten. Alternativ können die Feldinformationsdaten bereits in einer Datenbank 14 des Schwarmassistenzsystems 8 gespeichert sein.

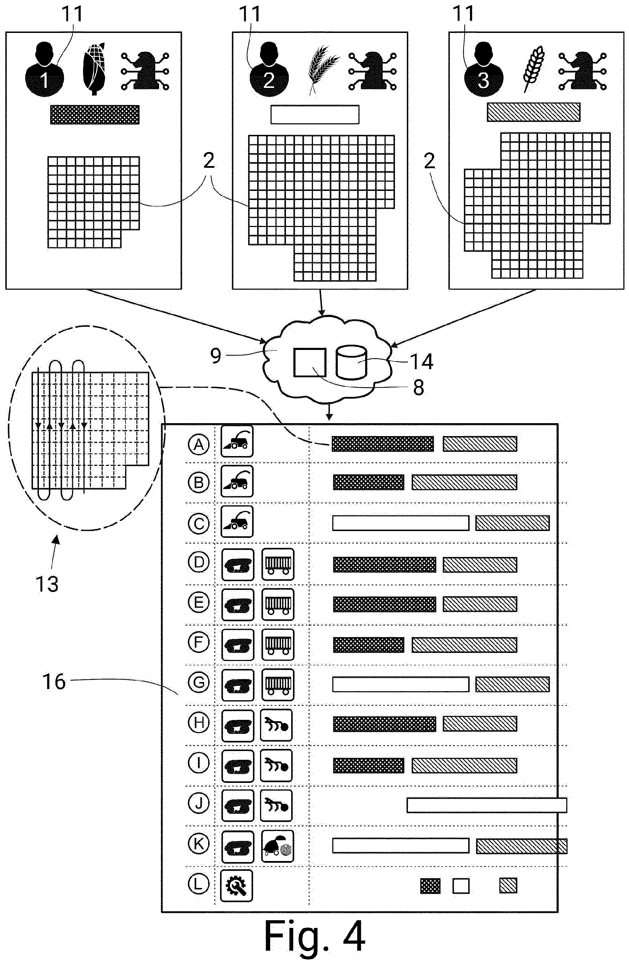

Die Kapazitätsdaten können zumindest Maschinendaten umfassen. Das Schwarmassistenzsystem 8 kann sodann eingerichtet sein, Anfragedaten einer Vielzahl von Abnehmern 11 betreffend eine Vielzahl landwirtschaftlicher Arbeitsaufgaben entgegenzunehmen und aus den Anfragedaten und Kapazitätsdaten eines Schwarms 15 autonomer landwirtschaftlicher Universal-Arbeitsmaschinen 4, und vorzugsweise Verfügbarkeitsdaten einer Vielzahl von Arbeitsaggregaten 5, einen optimierten Schwarmvermietungsplan 16 zu ermitteln. Fig. 4 zeigt exemplarisch eine derartige optimierte Zuordnung eines Schwarms 15 zu unterschiedlichen Abnehmern 11. Indem die technischen Daten, die zur Ermittlung eines optimierten Schwarmvermietungsplans 16 notwendig sind, bei dem Schwarmassistenzsystem 8 zusammenlaufen, lässt sich über die Abnehmer 11 und Anbieter 10 hinweg eine effizientere Nutzung der verfügbaren Ressourcen erzielen.

Das Schwarmassistenzsystem 8 kann weiter eingerichtet sein, den Schwarm 15 entsprechend dem Schwarmvermietungsplan 16 zu vermieten und die Durchführung des Schwarmvermietungsplans 16 zu steuern. Das Steuern des Schwarms 15 durch das Schwarmassistenzsystem 8 umfasst hier und vorzugsweise das Zurverfügungstellen des Prozesswissens und/oder eine technische Überwachung der Durchführung und/oder eine technische Unterstützung der Durchführung.

Unter einem Schwarm 15 wird vorliegend sowohl ein Schwarm 15 im weiten Sinne verstanden, also lediglich eine Vielzahl autonomer landwirtschaftlicher Arbeitsmaschinen, die dadurch verbunden sind, dass sie gemeinsam als Anbieter 10 fungieren und Teil des landwirtschaftlichen Arbeitsnetzwerkes 9 sind, als auch ein Schwarm 15 im engen Sinne, also ein Verbund 12 autonomer landwirtschaftlicher Arbeitsmaschinen, die gemeinsam eine landwirtschaftliche Arbeitsaufgabe abarbeiten.

Weiter ist hier und vorzugsweise vorgesehen, dass das Schwarmassistenzsystem 8 eingerichtet ist, den Schwarmvermietungsplan 16 mit der Zeit und/oder bei Erhalt weiterer und/oder geänderter Anfragedaten und/oder Kapazitätsdaten und/oder Verfügbarkeitsdaten landwirtschaftlicher Arbeitsaggregate 5 zu aktualisieren.

Hier und vorzugsweise erstellt und aktualisiert das Schwarmassistenzsystem 8 den Schwarmvermietungsplan 16 nach Art einer Grob- und Feinplanung. Anfangs legt das Schwarmassistenzsystem 8 insbesondere basierend auf Schätzungen, beispielsweise von Wetterdaten auf Basis von Durchschnittsdaten, eine Grobplanung fest und mit dem Hinzukommen neuer Anfragen und genauerer Wetterdaten entsteht eine Abweichung zur Grobplanung, auf die das Schwarmassistenzsystem 8 reagiert. Vorzugsweise reagiert das Schwarmassistenzsystem 8 mit der Zeit auf Abweichungen durch Festlegung von Maßnahmen zur Beseitigung der Abweichung. Die Maßnahmen können das Zuweisen weiterer Ressourcen, insbesondere weiterer autonomer landwirtschaft-licher Universal-Arbeitsmaschinen 4, zu einer landwirtschaftlichen Arbeitsaufgabe umfassen und/oder das Ändern der Zuweisung autonomer landwirtschaftlicher Universal-Arbeitsmaschinen 4, indem zum Beispiel eine autonome landwirtschaftliche Universal-Arbeitsmaschine 4 mit mehr oder auch weniger Erntekapazität eingesetzt wird. Es kann auch notwendig werden, größere Teile des Schwarmvermietungsplans 16 zu aktualisieren oder diesen neu zu ermitteln.

Es kann auch vorgesehen sein, dass das Schwarmassistenzsystem 8 einge-richtet ist, eine Simulation der Durchführung der angefragten Arbeitsaufgabe oder Arbeitsaufgaben durch verschiedene autonome landwirtschaftliche Universal-Arbeitsmaschinen 4 in unterschiedlichen Konfigurationen und/oder Kombinationen und/oder Zuordnungen zwischen den autonomen landwirtschaftlichen Universal-Arbeitsmaschinen 4 und den angefragten Arbeitsaufgaben durchzuführen und basierend auf der Simulation einen optimierten Schwarmvermietungsplan 16 zu ermitteln und/oder zu aktualisieren.

Unter verschiedenen Konfigurationen werden unterschiedliche Arbeitsaggregate 5, Softwaremodule und dergleichen verstanden. Die Kombinationen können beispielsweise Verbundstrukturen und Verbundteilnehmer umfassen.

Je größer der Schwarm 15, desto effizienter kann die Abarbeitung der land-wirtschaftlichen Arbeitsaufgaben erfolgen. Das Optimierungsziel, hinsichtlich dessen der Schwarmvermietungsplan 16 optimiert wird, ist vorzugsweise eine Effizienz, insbesondere eine Kosteneffizienz und/oder eine Ressourceneffizienz. Die Optimierung des Schwarmvermietungsplans 16 ist abhängig davon, welches Prozesswissen einer jeweiligen autonomen landwirtschaftlichen Universal-Arbeitsmaschine 4 zur Verfügung gestellt werden kann. Dieses Prozesswissen ist allerdings von der autonomen landwirtschaftlichen Universal-Arbeitsmaschine 4 selbst abhängig, von den Feldinformationen, einem eventuellen Verbund 12, und dergleichen. Somit liegt ein Problem vor, bei dem viele der Variablen voneinander abhängig sind. Daher wird vorgeschlagen, unterschiedliche Lösungen zu simulieren, um einen optimierten Schwarmvermietungsplan 16 zu ermitteln. Kern der Möglichkeit, einen optimierten Schwarmvermietungsplan 16 und somit letztlich eine optimierte Feldbearbeitung zu erreichen, ist das Schwarmassistenzsystem 8.

Weiter ist hier und vorzugsweise vorgesehen, dass das Schwarmassistenzsystem 8 eingerichtet ist, die Durchführung des Schwarmvermietungsplans 16 zu steuern, indem das Schwarmassistenzsystem 8 dem Schwarm 15 jeweils individuelles Prozesswissen zur Durchführung der Vielzahl der landwirtschaftlichen Arbeitsaufgaben übermittelt und vorzugsweise eine Logistik des Schwarms 15 und/oder der Vielzahl von Arbeitsaggregaten 5 ermittelt und koordiniert.

Autonome landwirtschaftliche Universal-Arbeitsmaschinen 4 dürfen gegebenenfalls nicht alleine auf Straßen fahren. Zusätzlich müssen sie mit den Arbeitsaggregaten 5 zusammengeführt werden und diese müssen montiert werden. Besteht für diese Probleme keine Lösung, ist der Schwarmvermietungsplan 16 nicht vollständig. Daher berücksichtigt das Schwarmassistenzsystem 8 die Logistik vorzugsweise schon bei der Erstellung des Schwarmvermietungsplans 16.

Eine weitere Variante sieht vor, dass die Anfragedaten ein quantitatives Arbeitsergebnis, insbesondere eine Erntemenge und/oder eine Arbeitstiefe und eine Fläche einer Bodenbearbeitung, umfassen können, vorzugsweise, dass das Schwarmassistenzsystem 8 eingerichtet ist, ein Leisten des quantitativen Arbeitsergebnisses zu verkaufen und das Erreichen des quantitativen Arbeitsergebnisses durch das Vermieten einer oder mehrerer der autonomen landwirtschaftlichen Arbeitsmaschinen in Abhängigkeit von deren Kapazitätsdaten sicherzustellen.

Ein quantitatives Arbeitsergebnis kann beispielsweise eine Menge an Tonnen Erntegut oder eine zu pflügende Fläche inklusive Pflügetiefe sein. Vorliegend ist für einen Nutzer schwer abzusehen, wie viele autonome landwirtschaftliche Universal-Arbeitsmaschinen 4 in welcher Konfiguration er benötigt. Somit besteht ein Hindernis im Verständnis der mannigfaltigen technischen Zusammenhänge, die das Schwarmassistenzsystem 8 abbildet. Dieses Verständnisproblem kann dadurch gelöst werden, dass der Nutzer von den technischen Zusammenhängen entkoppelt wird.

Weiter ist hier und vorzugsweise vorgesehen, dass das Schwarmassistenzsystem 8 eingerichtet ist, als Teil der Anfragedaten eine Routenplanung 13 zu erhalten und/oder eine Routenplanung 13 für die angefragte Arbeitsaufgabe zu erstellen, vorzugsweise, dass das Schwarmassistenzsystem 8 die Routenplanung 13 bei der Simulation zur Ermittlung des optimierten Schwarmvermietungsplans 16 berücksichtigt.

Die Routenplanung 13 kann auf historischen Routen auf der Anbaufläche 2 basieren, sie kann auf Basis von Schlagkarteien von dem Schwarmassistenzsystem 8 ermittelt werden oder von einem Nutzer nach Präferenz vorgegeben werden.

Die Routenplanung 13 kann auch von der landwirtschaftlichen Arbeitsaufgabe abhängen. Hier und vorzugsweise kann vorgesehen sein, dass das Schwarmassistenzsystem 8 die autonome landwirtschaftliche Universal-Arbeitsmaschine 4 für Haupttätigkeiten und/oder für Nebentätigkeiten vermietet. Eine Haupttätigkeit ist die primäre Feldbearbeitung, also das Pflügen, Ernten, o. dgl. Eine Nebentätigkeit ist beispielsweise das vorherige Suchen nach Wild, der Abtransport von Erntegut oder das Ziehen eines Anhängers für Erntegut wie in Fig. 2 und Fig. 3 dargestellt.

Die Routenplanung 13 kann von unterschiedlichen Zonen der Anbaufläche 2 abhängen. Eine Nebentätigkeit kann auch das Ermitteln derartiger Zonen durch Testfahrten, Bodenproben o. dgl. sein. Auch die Feldbearbeitung selbst kann von den Feldzonen abhängig sein und entsprechend von dem Schwarmassistenzsystem 8 geplant werden.

Das Schwarmassistenzsystem 8 kann als dezentrales System ausgestaltet sein, bei dem die autonomen landwirtschaftlichen Universal-Arbeitsmaschinen 4 zur Bereitstellung des Schwarmassistenzsystems 8 miteinander rechentechnisch kooperieren.

In dieser Variante können die autonomen landwirtschaftlichen Universal-Arbeitsmaschinen 4 das Schwarmassistenzsystem 8 oder einen Teil davon bilden. Sie können ihre Rechenleistung vereinen und/oder einige oder alle der hier genannten Daten austauschen. Beispielsweise kann eine autonomen landwirtschaftliche Universal-Arbeitsmaschine 4 Feldinformationsdaten einer vergangenen Feldbearbeitung an eine andere autonomen landwirtschaftliche Universal-Arbeitsmaschine 4 übermitteln, die für eine landwirtschaftliche Arbeitsaufgabe auf diesem Feld vermietet wurde.

Alternativ ist vorgesehen, dass das Schwarmassistenzsystem 8 als zentrales System ausgestaltet ist, das mit mehreren autonomen landwirtschaftlichen Universal-Arbeitsmaschinen 4 über das landwirtschaftliche Arbeitsnetzwerk 9 in Verbindung steht.

Das zentrale Schwarmassistenzsystem 8 ist extern zu den autonomen landwirtschaftlichen Universal-Arbeitsmaschinen 4, insbesondere cloudbasiert, ausgestaltet.

Beansprucht wird außerdem gemäß einer weiteren Lehre, der eigenständige Bedeutung zukommt, ein Verfahren zum Durchführen einer landwirtschaftlichen Arbeitsaufgabe mittels einer autonomen landwirtschaftlichen Universal-Arbeitsmaschine 4.

Wesentlich bei dem Verfahren ist, dass ein in ein landwirtschaftliches Arbeitsnetzwerk 9 eingebundenes Schwarmassistenzsystem 8 vorhanden ist, dass das landwirtschaftliche Arbeitsnetzwerk 9 autonome landwirtschaftliche Universal-Arbeitsmaschinen 4 als Anbieter 10 von landwirtschaftlichen Arbeitsaufgaben und Abnehmer 11 von landwirtschaftlichen Arbeitsaufgaben miteinander und dem Schwarmassistenzsystem 8 verbindet, dass die autonomen Universal-Arbeitsmaschinen 4 zur Durchführung einer Vielzahl unterschiedlicher landwirtschaftlicher Arbeitsaufgaben konfigurierbar sind, indem sie mit wechselnden Arbeitsaggregaten 5 ausgestattet werden, dass das Schwarmassistenzsystem 8 eingerichtet ist, eine angefragte landwirtschaftliche Arbeitsaufgabe betreffende Anfragedaten von den Abnehmern 11 entgegenzunehmen, die Anfragedaten mit Kapazitätsdaten mindestens einer der landwirtschaftlichen Universal-Arbeitsmaschinen 4 abzugleichen und basierend auf dem Ergebnis des Abgleichs eine Vermietung mindestens einer landwirtschaftlichen Universal-Arbeitsmaschine 4 zur Durchführung der angefragten landwirtschaftlichen Arbeitsaufgabe durchzuführen und dass die landwirtschaftliche Universal-Arbeitsmaschine 4 die angefragte landwirtschaftliche Arbeitsaufgabe durchführt.

Auf alle Ausführungen zu dem vorschlagsgemäßen Schwarmassistenzsystem 8 darf verwiesen werden. Alle Verfahrensschritte, die hierin beschrieben sind, insbesondere die, zu deren Ausführung das Schwarmassistenzsystem 8 oder die autonome landwirtschaftliche Universal-Arbeitsmaschine 4 eingerichtet sind, können einzeln oder in beliebiger Kombination Gegenstand des Verfahrens sein.

Weiter ist hier und vorzugsweise vorgesehen, dass die autonomen landwirtschaftlichen Universal-Arbeitsmaschinen 4 derart als Anbieter 10 auftreten, dass sie sich, vorzugsweise in einem vorgegebenen Rahmen, selbst vermieten und dass die autonomen landwirtschaftliche Universal-Arbeitsmaschinen 4 dafür ihre Kapazitätsdaten eigenständig an das Schwarmassistenzsystem 8 übertragen und vorzugsweise eigenständig Vermietungen in Zusammenarbeit mit dem Schwarmassistenzsystem 8 durchführen.

Der Rahmen kann von einem Besitzer der autonomen landwirtschaftlichen Universal-Arbeitsmaschine 4 vorgegeben werden, beispielsweise abhängig von seinem eigenen Bedarf der Nutzung der autonomen landwirtschaftlichen Universal-Arbeitsmaschine 4.

Vorgeschlagen wird außerdem gemäß einer weiteren Lehre, der eigenständige Bedeutung zukommt, eine autonome landwirtschaftliche Arbeitsmaschine eingerichtet zur Verwendung in dem vorschlagsgemäßen Verfahren.

Auf alle Ausführungen zu dem vorschlagsgemäßen Verfahren und dem vorschlagsgemäßen Schwarmassistenzsystem 8 darf verwiesen werden.

Vorgeschlagen wird außerdem gemäß einer weiteren Lehre, der eigenständige Bedeutung zukommt, ein Computerprogrammprodukt umfassend Befehle, die bei ihrer Ausführung eine Recheneinheit veranlassen, als vorschlagsgemäßes Schwarmassistenzsystem 8 zu funktionieren.

Auf alle Ausführungen zu dem vorschlagsgemäßen Verfahren, dem vorschlagsgemä-ßen Schwarmassistenzsystem 8 und der vorschlagsgemäßen autonomen landwirtschaftlichen Universal-Arbeitsmaschine 4 darf verwiesen werden.

### Bezugszeichenliste

- 1: Mähdrescher
- 2: Anbaufläche
- 3: Feldbestand
- 4: Universal-Arbeitsmaschine
- 5: Arbeitsaggregat
- 6: Rumpf-Feldhäcksler
- 7: Feldhäcksler
- 8: Schwarmassistenzsystem
- 9: landwirtschaftliches Arbeitsnetzwerk
- 10: Anbieter
- 11: Abnehmer
- 12: Verbund
- 13: Routenplanung
- 14: Datenbank
- 15: Schwarm
- 16: Schwarmvermietungsplan

## Patentansprüche

1. Schwarmassistenzsystem für autonome landwirtschaftliche Universal-Arbeitsmaschinen (4),
wobei das Schwarmassistenzsystem (8) in ein landwirtschaftliches Arbeitsnetzwerk (9) einbindbar ist, wobei das landwirtschaftliche Arbeitsnetzwerk (9) autonome landwirtschaftliche Universal-Arbeitsmaschinen (4) als Anbieter (10) von landwirtschaftlichen Arbeitsaufgaben und Abnehmer (11) von landwirtschaftlichen Arbeitsaufgaben miteinander und mit dem Schwarmassistenzsystem (8) verbindet,
wobei die autonomen landwirtschaftlichen Universal-Arbeitsmaschinen (4) zur Durchführung einer Vielzahl unterschiedlicher landwirtschaftlicher Arbeitsaufgaben konfigurierbar sind, indem sie mit wechselnden Arbeitsaggregaten (5) ausgestattet werden, wobei das Schwarmassistenzsystem (8) eingerichtet ist, eine angefragte land-wirtschaftliche Arbeitsaufgabe betreffende Anfragedaten von den Abnehmern (11) entgegenzunehmen, die Anfragedaten mit Kapazitätsdaten mindestens einer der landwirtschaftlichen Universal-Arbeitsmaschinen (4) abzugleichen und basierend auf dem Ergebnis des Abgleichs eine Vermietung mindestens einer landwirtschaftlichen Universal-Arbeitsmaschine (4) zur Durchführung der angefragten landwirtschaftlichen Arbeitsaufgabe durchzuführen.

2. Schwarmassistenzsystem nach Anspruch 1, **dadurch gekennzeichnet, dass** das Schwarmassistenzsystem (8) eingerichtet ist, für die Durchführung der landwirtschaftlichen Arbeitsaufgabe bestimmtes Prozesswissen für die autonome landwirtschaftliche Universal-Arbeitsmaschine (4) aus den Anfragedaten, den Kapazitätsdaten und vorzugsweise zusätzlich aus allgemeinen und/oder die angefragte Arbeitsaufgabe betreffenden spezifischen Prozessdaten und/oder zusätzlich aus Umweltdaten, insbesondere Wetterdaten, zu ermitteln und der vermieteten autonomen landwirtschaftlichen Universal-Arbeitsmaschine (4) zur Durchführung der landwirtschaftlichen Arbeitsaufgabe zu übermitteln.

3. Schwarmassistenzsystem nach Anspruch 1 oder 2, **dadurch gekennzeichnet, dass** die Anfragedaten zumindest Feldinformationsdaten umfassen und/oder die Kapazitätsdaten zumindest Maschinendaten umfassen, vorzugsweise, dass das Schwarmassistenzsystem (8) eingerichtet ist, Anfragedaten einer Vielzahl von Abnehmern (11) betreffend eine Vielzahl landwirtschaftlicher Arbeitsaufgaben entgegenzunehmen, aus den Anfragedaten und Kapazitätsdaten eines Schwarms (15) autonomer landwirtschaftlicher Universal-Arbeitsmaschinen (4) und vorzugsweise Verfügbarkeitsdaten einer Vielzahl von Arbeitsaggregaten (5), einen optimierten Schwarmvermietungsplan (16) zu ermitteln, den Schwarm (15) entsprechend dem Schwarmvermietungsplan (16) zu vermieten und die Durchführung des Schwarmvermietungsplans (16) zu steuern.

4. Schwarmassistenzsystem nach Anspruch 3, **dadurch gekennzeichnet, dass** das Schwarmassistenzsystem (8) eingerichtet ist, den Schwarmvermietungsplan (16) mit der Zeit und/oder bei Erhalt weiterer und/oder geänderter Anfragedaten und/oder Kapazitätsdaten und/oder Verfügbarkeitsdaten landwirtschaftlicher Arbeitsaggregate (5) zu aktualisieren.

5. Schwarmassistenzsystem nach einem der vorhergehenden Ansprüche, **dadurch gekennzeichnet, dass** das Schwarmassistenzsystem (8) eingerichtet ist, eine Simulation der Durchführung der angefragten Arbeitsaufgabe oder Arbeitsaufgaben durch verschiedene autonome landwirtschaftliche Universal-Arbeitsmaschinen (4) in unterschiedlichen Konfigurationen und/oder Kombinationen und/oder Zuordnungen zwischen den autonomen landwirtschaftlichen Universal-Arbeitsmaschinen (4) und den angefragten Arbeitsaufgaben durchzuführen und basierend auf der Simulation einen optimierten Schwarmvermietungsplan (16) zu ermitteln und/oder zu aktualisieren.

6. Schwarmassistenzsystem nach einem der Ansprüche 3 bis 5, **dadurch gekennzeichnet, dass** das Schwarmassistenzsystem (8) eingerichtet ist, die Durchführung des Schwarmvermietungsplans (16) zu steuern, indem das Schwarmassistenzsystem (8) dem Schwarm (15) jeweils individuelles Prozesswissen zur Durchführung der Vielzahl der landwirtschaftlichen Arbeitsaufgaben übermittelt und vorzugsweise eine Logistik des Schwarms (15) und/oder der Vielzahl von Arbeitsaggregaten (5) ermittelt und koordiniert.

7. Schwarmassistenzsystem nach einem der vorhergehenden Ansprüche, **dadurch gekennzeichnet, dass** die Anfragedaten ein quantitatives Arbeitsergebnis, insbesondere eine Erntemenge und/oder eine Arbeitstiefe und eine Fläche einer Bodenbearbeitung, umfassen können, dass das Schwarmassistenzsystem (8) eingerichtet ist, ein Leisten des quantitativen Arbeitsergebnisses zu verkaufen und das Erreichen des quantitativen Arbeitsergebnisses durch das Vermieten einer oder mehrerer der autonomen landwirtschaftlichen Arbeitsmaschinen in Abhängigkeit von deren Kapazitätsdaten sicherzustellen.

8. Schwarmassistenzsystem nach einem der vorhergehenden Ansprüche, **dadurch gekennzeichnet, dass** das Schwarmassistenzsystem (8) eingerichtet ist, als Teil der Anfragedaten eine Routenplanung (13) zu erhalten und/oder eine Routenplanung (13) für die angefragte Arbeitsaufgabe zu erstellen, vorzugsweise, dass das Schwarmassistenzsystem (8) die Routenplanung (13) bei der Simulation zur Ermittlung des optimierten Schwarmvermietungsplans (16) berücksichtigt.

9. Schwarmassistenzsystem nach einem der vorhergehenden Ansprüche, **dadurch gekennzeichnet, dass** das Schwarmassistenzsystem (8) als dezentrales System ausgestaltet ist, bei dem die autonomen landwirtschaftlichen Universal-Arbeitsmaschinen (4) zur Bereitstellung des Schwarmassistenzsystems (8) miteinander rechentechnisch kooperieren.

10. Schwarmassistenzsystem nach einem der Ansprüche 1 bis 8, **dadurch gekennzeichnet, dass** das Schwarmassistenzsystem (8) als zentrales System ausgestaltet ist, das mit mehreren autonomen landwirtschaftlichen Universal-Arbeitsmaschinen (4) über das landwirtschaftliche Arbeitsnetzwerk (9) in Verbindung steht.

11. Verfahren zum Durchführen einer landwirtschaftlichen Arbeitsaufgabe mittels einer autonomen landwirtschaftlichen Universal-Arbeitsmaschine (4), **dadurch gekennzeichnet, dass** ein in ein landwirtschaftliches Arbeitsnetzwerk (9) eingebundenes Schwarmassistenzsystem (8), insbesondere nach einem der vorhergehenden Ansprüche, vorhanden ist, dass das landwirtschaftliche Arbeitsnetzwerk (9) autonome landwirtschaftliche Universal-Arbeitsmaschinen (4) als Anbieter (10) von landwirtschaftlichen Arbeitsaufgaben und Abnehmer (11) von landwirtschaftlichen Arbeitsaufgaben miteinander und dem Schwarmassistenzsystem (8) verbindet,
dass die autonomen Universal-Arbeitsmaschinen (4) zur Durchführung einer Vielzahl unterschiedlicher landwirtschaftlicher Arbeitsaufgaben konfigurierbar sind, indem sie mit wechselnden Arbeitsaggregaten (5) ausgestattet werden,
dass das Schwarmassistenzsystem (8) eingerichtet ist, eine angefragte landwirtschaftliche Arbeitsaufgabe betreffende Anfragedaten von den Abnehmern (11) entgegenzunehmen, die Anfragedaten mit Kapazitätsdaten mindestens einer der landwirtschaftlichen Universal-Arbeitsmaschinen (4) abzugleichen und basierend auf dem Ergebnis des Abgleichs eine Vermietung mindestens einer landwirtschaftlichen Universal-Arbeitsmaschine (4) zur Durchführung der angefragten landwirtschaftlichen Arbeitsaufgabe durchzuführen und
dass die landwirtschaftliche Universal-Arbeitsmaschine (4) die angefragte landwirtschaftliche Arbeitsaufgabe durchführt.

12. Verfahren nach Anspruch 10, **dadurch gekennzeichnet, dass** die autonomen landwirtschaftlichen Universal-Arbeitsmaschinen (4) derart als Anbieter (10) auftreten, dass sie sich, vorzugsweise in einem vorgegebenen Rahmen, selbst vermieten und dass die autonomen landwirtschaftliche Universal-Arbeitsmaschinen (4) dafür ihre Kapazitätsdaten eigenständig an das Schwarmassistenzsystem (8) übertragen und vorzugsweise eigenständig Vermietungen in Zusammenarbeit mit dem Schwarmassistenzsystem (8) durchführen.

13. Autonome landwirtschaftliche Arbeitsmaschine eingerichtet zur Verwendung in dem Verfahren nach Anspruch 11 oder 12.

14. Computerprogrammprodukt umfassend Befehle, die bei ihrer Ausführung eine Recheneinheit veranlassen, als Schwarmassistenzsystem (8) nach einer der Ansprüche 1 bis 10 zu funktionieren.
